# EUROPEAN PATENT SPECIFICATION

(11) **EP 3 896 389 B1**
(45) Date of publication and mention of the grant of the patent: **25.06.2025**
(21) Application number: 19897395.0
(22) Date of filing: 19.11.2019
(51) Int. Cl.: G01C 3/06, G01C 3/02, B60R 11/04, B60R 11/00

(54) **STEREO CAMERA DEVICE**
STEREOKAMERAVORRICHTUNG
DISPOSITIF DE CAMÉRA STÉRÉO

(30) Priority: 11.12.2018 JP 2018231605
(43) Date of publication of application: 20.10.2021
(73) Proprietor: Hitachi Astemo, Ltd., Hitachinaka-shi, Ibaraki 312-8503 (JP)
(72) Inventor: KATOU, Seiichi, Tokyo 100-8280 (JP); SHINOHARA, Hidenori, Hitachinaka-shi, Ibaraki 312-8503 (JP); MASUDA, Keisuke, Hitachinaka-shi, Ibaraki 312-8503 (JP); BABA, Atsushi, Tokyo 100-8280 (JP)
(74) Representative: MERH-IP Matias Erny Reichl Hoffmann Patentanwälte PartG mbB
(86) International application number: PCT/JP2019/045180
(87) International publication number: WO 2020/121746

(56) References cited:
- WO-A1-2006/052024
- WO-A1-2017/163584
- JP-A- 2016 513 804
- JP-A- 2018 109 724
- US-A1- 2015 215 606
- US-A1- 2019 033 579

## Description

### Technical Field

The present invention relates to a stereo camera device.

### Background Art

In recent years, the installation of driver assistance systems in actual vehicles has progressed with the aim of realizing a safe and comfortable car society. Among them, systems that pursue the safety, convenience, and comfort of drivers and passengers have been developed such as a collision damage reduction braking control device that automatically performs a stop operation before a collision, an inter-vehicle distance control device that automatically tracks a preceding vehicle, and a lane departure prevention device, and sign recognition. Among such systems, importance of external environment recognition systems that recognize vehicles, pedestrians, and the like and measure the distance of an object have increased.

A stereo camera, which is one of the external environment recognition systems, extracts a feature point common to images from a pair of pieces of image information, and an integrated circuit performs a process of obtaining the number of pixels in which a position of the feature point is shifted between the pair of images to calculate the distance. Therefore, if there is a shift other than the original parallax between the pair of images, an error occurs in a distance measurement result. One of causes of the shift is a temperature increase due to sunlight, heat generation inside a device, or the like. If a temperature of an internal component exceeds an upper limit temperature, there is a concern that malfunction may occur and the life of the component may be shortened. Further, when a temperature difference occurs between a pair of left and right imaging elements, there is a concern that the measurement accuracy may deteriorate.

As the stereo camera, there is disclosed a heat radiation structure in which one end of a heat transfer portion that transfers heat from a part to a substrate holding portion is in contact with a heat generating part, and the other end of the heat transfer portion is in contact with the substrate holding portion on a line equidistant from imaging elements of two imaging devices, for example, as disclosed in PTL 1. PTL 2 relates to a symmetrically provided vehicle-mounted image processing device. PTL 3 relates to a stereo camera device in which plural image pickup devices are mounted.

### Citation List

### Patent Literature

PTL 1: JP 2016-177257 A
PTL 2: WO 2017/ 163 584 A1
PTL 3: US 2015/ 215 606 A1

### Summary of Invention

### Technical Problem

In the related art as described in PTL 1, an operation failure is suppressed by suppressing a bias of a temperature distribution in an imaging unit. However, the length of the heat transfer portion, which is a heat transfer path, becomes long in the configuration using the heat transfer portion that transfers heat from a circuit element to the substrate holding portion, so that the thermal resistance increases.

Therefore, for example, when a temperature of a vehicle body side such as a windshield on which the stereo camera is installed increases due to sunlight or the like so that a temperature difference between the car body side and the stereo camera is insufficient or the temperature of the vehicle body side is higher than that of the stereo camera, it is conceivable that it is difficult to suppress a temperature increase in the stereo camera without sufficiently obtaining the heat radiation effect. In particular, an imaging element such as a CMOS, which is important for the stereo camera, often has a relatively lower upper limit temperature for guaranteeing an operation than other components, and it is conceivable that it is difficult to suppress a temperature increase in the imaging element.

The present invention has been made to solve such a problem, and a main object of the present invention is to provide a stereo camera device capable of reducing a temperature difference between a pair of left and right imaging elements and reducing a temperature increase in the imaging elements.

### Solution to Problem

In order to solve the above-described problems, the present invention provides a stereo camera device having the features defined in claim **1.** Further preferred embodiments are defined in the dependent claims.

### Advantageous Effects of Invention

According to the present invention, it is possible to provide the stereo camera device capable of reducing the temperature difference between the pair of left and right imaging elements and reducing the temperature increase in the imaging elements.

Other objects, configurations, operations, and effects of the present invention which have not been described above become apparent from embodiments to be described hereinafter.

### Brief Description of Drawings

[FIG. 1] FIG. 1 is an external view of a stereo camera according to a first embodiment of the present invention.
[FIG. 2] FIG. 2 is a perspective view of the stereo camera according to the first embodiment of the present invention.
[FIG. 3] FIG. 3 is a perspective view illustrating a yz plane of the stereo camera according to the first embodiment of the present invention.
[FIG. 4] FIG. 4 is a graph illustrating a temperature increase of a first imaging element and a temperature increase of a second imaging element depending on a first distance to a first circuit element center of the present invention.
[FIG. 5] FIG. 5 is a perspective view of a stereo camera according to a second embodiment of the present invention.
[FIG. 6] FIG. 6 is a perspective view of a stereo camera according to a third embodiment of the present invention.
[FIG. 7] FIG. 7 is a perspective view of a stereo camera according to a fourth embodiment of the present invention.
[FIG. 8] FIG. 8 is a perspective view of a stereo camera according to a fifth embodiment of the present invention.
[FIG. 9] FIG. 9 is a perspective view of a stereo camera according to a sixth embodiment of the present invention.
[FIG. 10] FIG. 10 is a cross-sectional view of the stereo camera according to the sixth embodiment of the present invention.
[FIG. 11] FIG. 11 is a cross-sectional view of a stereo camera according to a seventh embodiment of the present invention.
[FIG. 12] FIG. 12 is a view of an allowable range of a temperature increase of a first imaging element and a temperature increase of a second imaging element depending on a first distance from a device center to a first circuit element center according to an eighth embodiment of the present invention.

### Description of Embodiments

Hereinafter, embodiments of the present invention will be described in detail with reference to the accompanying drawings, but the present invention is not limited to the following embodiments, and various modifications and applications that fall within the technological concept of the present invention will be also included in the scope of the present invention.

Note that configurations denoted by the same reference signs have the same functions, and thus, descriptions of those that have already been described will be omitted unless otherwise specified. Further, orthogonal coordinate axes including an x axis, a y axis and a z axis will be described in the necessary drawings in order to clarify the description of positions of the respective parts.

### (First Embodiment)

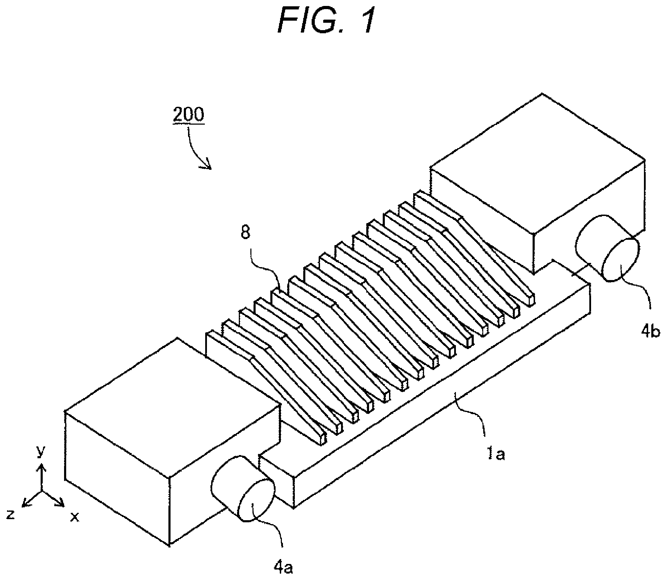

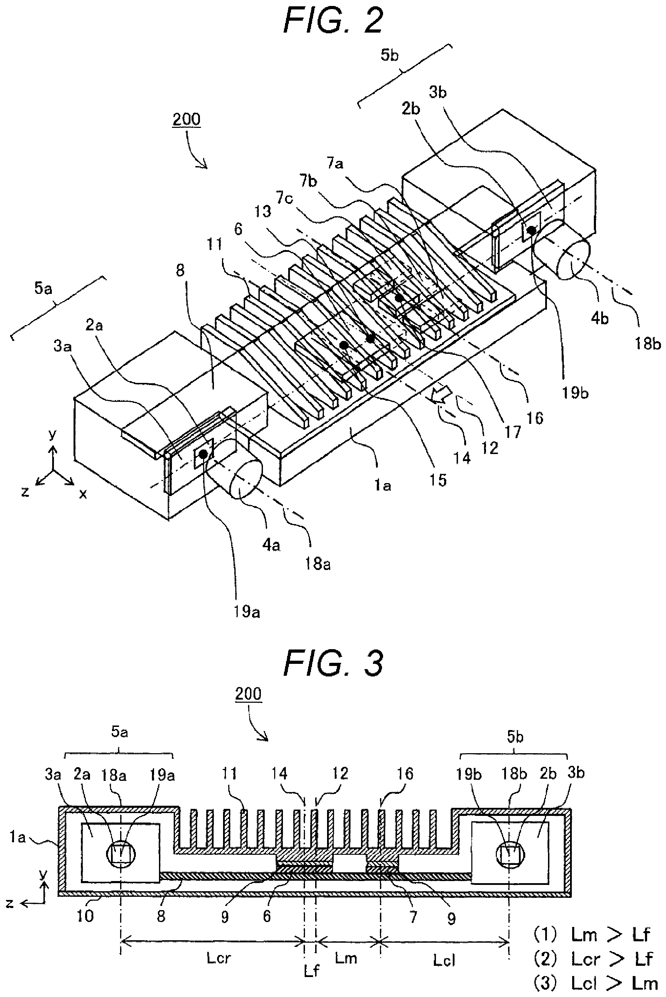

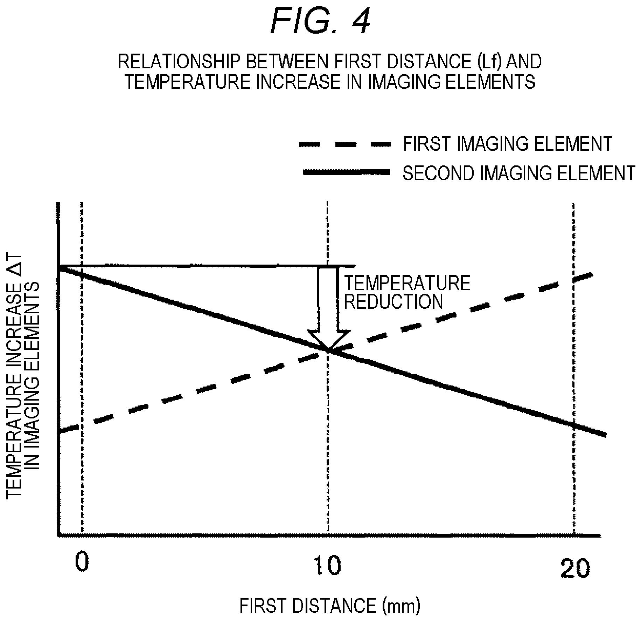

An example of a stereo camera 200 (stereo camera device) of the present embodiment will be described. FIG. 1 is a perspective view illustrating an appearance of the stereo camera 200 according to a first embodiment of the present invention. FIG. 2 is a perspective view illustrating an internal configuration of the stereo camera 200 of FIG. 1. FIG. 3 is a perspective view illustrating a yz plane of the stereo camera 200 of FIG. 2. Further, FIG. 4 is a graph illustrating a temperature increase of a first imaging element 2a and a temperature increase of a second imaging element 2b depending on a length of a first distance (Lf) in the stereo camera 200 of FIG. 1. Note that a description will be given in FIGS. 1 to 4 by setting a Cartesian coordinate system including the x axis in which the front direction is positive in the front-back direction (optical-axis direction of a camera module) of the stereo camera 200, the y axis in which the upward direction is positive in the up-down direction (height direction), and the z axis in which the right direction (right direction when facing the front direction) is positive in the left-right direction. In the graph of FIG. 4, the horizontal axis represents the first distance, and the vertical axis represents the temperature increase of the first imaging element 2a and the temperature increase of the second imaging element 2b. Further, in the graph of FIG. 4, the temperature increase of the first imaging element 2a is indicated by a broken line, and the temperature increase of the second imaging element 2b is indicated by a solid line. The first distance (Lf) is a distance from a first circuit element center 14 to a device center 12 (the stereo camera device center).

The device center 12 in a direction between camera modules 5a and 5b (the direction connecting the camera module 5a and the camera module 5b, that is, the z-axis direction) refers to an xy plane that has a line passing through a midpoint 13, which divides a portion between the two imaging elements 2a and 2b mounted on the pair of left and right camera modules 5a and 5b into two portions, and connecting the imaging elements 2a and 2b as a normal line.

The first circuit element center 14 refers to a plane that is parallel to the xy plane and passes through a centroid 15 of the first circuit element 6, and a second circuit element center 16 refers to a plane that is parallel to the xy plane and passes through a centroid 17 of the second circuit element 7 including an element groups of second circuit elements 7a, 7b, and 7c. Note that the centroid is used here for the sake of simplicity when obtaining the center, but the center of gravity or the heat generation center may be used instead.

A first imaging element center 18a refers to a plane parallel to the xy plane that passes through a first imaging element center 19a (a center of the optical first imaging element 2a including a lens and the like). Similarly, a second imaging element center 18b refers to a plane that is parallel to the xy plane and passes through a second imaging element center 19b (a center of the optical second imaging element 2b including a lens and the like).

As illustrated in FIGS. 1 and 2, the stereo camera 200 includes the first imaging element 2a and the second imaging element 2b, a first circuit element 6 and a second circuit element 7 disposed between the first imaging element 2a and the second imaging element 2b, and a casing 1a for retaining the first imaging element 2a, the first circuit element 6, the second circuit element 7, and the second imaging element 2b along the z axis in this order.

The first imaging element 2a is attached to the casing 1a as a set of the first camera module 5a including a first imaging element substrate 3a and a first lens 4a. Similarly, the second imaging element 2b is attached to the casing 1a as a set of the second camera module 5b including a second imaging element substrate 3b and a second lens 4b. The first circuit element 6 and the second circuit element 7 that process signals from the camera modules 5a and 5b are mounted on a circuit board 8, and the first circuit element 6 and the second circuit element 7 are attached by being thermally connected to the casing 1a via a thermally conductive member 9. At that time, there may be a plurality of the second circuit elements 7, and FIG. 2 illustrates a case where three second circuit elements 7a to 7c are mounted.

Further, a cover 10 that covers a lower surface of the casing 1a has a structure that is attached to the casing 1a using a screw or the like. An electrical connection to the stereo camera 200 is made by connecting a wiring to an internal electrical connector through an opening (not illustrated) on a rear surface of the casing 1a.

The stereo camera 200 can image a front side of the stereo camera 200 using the pair of left and right camera modules 5a and 5b to image the front side of the stereo camera 200 and obtain parallax of an object from a pair of left and right captured images to obtain the distance to the object. Therefore, if there is a difference between the temperature of the first imaging element 2a and the temperature of the second imaging element 2b due to an increase in heat generation amount (power consumption) caused by high performance of the stereo camera 200 and a decrease in surface area due to miniaturization, there occurs a difference in external recognition between a signal of the first imaging element 2a and a signal of the second imaging element 2b, which causes a decrease in accuracy of the measurement distance or the like. Further, when the temperature of the first imaging element 2a or the temperature of the second imaging element 2b becomes high, a noise component of the signal increases and the measurement accuracy deteriorates. Similarly, malfunction or the like is caused if the temperature of the first imaging element 2a or the temperature of the second imaging element 2b becomes high.

The first circuit element 6 is, for example, a microcomputer, a signal processing element, a field programmable gate array (FPGA), or the like that processes an image signal, and refers to a circuit element that generates a large amount of heat and requires heat conduction to the casing 1a or the cover 10. The second circuit elements 7a to 7c are, for example, double data rate (DDR) memories or the like, and are circuit elements used in the first circuit element 6. The second circuit elements 7a to 7c may be circuit elements that are not used in the first circuit element 6. The second circuit elements 7a to 7c refer to, for example, memories used for temporary storage of data, and the first circuit element 6 has a larger heat generation amount (power consumption) than the second circuit element 7. A plurality of fins 11 for heat radiation are disposed in the upper part of the casing 1a at least between the first imaging element 2a and the second imaging element 2b.

The present embodiment relates to an arrangement of circuit elements, and a second distance (Lm) from the device center 12 to the second circuit element center 16 is longer than the first distance (Lf) from the device center 12 to the first circuit element center 14 in the direction between the camera modules 5a and 5b (z-axis direction). Further, a third distance (Lcr) from the first circuit element center 14 to the first imaging element center 18a is longer than the first distance (Lf) from the device center 12 to the first circuit element center 14 in the direction between the camera modules 5a and 5b (z-axis direction). Similarly, a fourth distance (Lcl) from the second circuit element center 16 to the second imaging element center 18b is longer than the second distance (Lm) from the device center 12 to the second circuit element center 16 in the direction between the camera modules 5a and 5b (z-axis direction).

Since the second distance (Lm) is longer than the first distance (Lf), heat generation centers of the first circuit element 6 and the second circuit element 7 can be disposed at the device center 12, and the temperature of the first imaging element 2a and the temperature of the second imaging element 2b can be made equal. As can be understood by referring to the temperature increase of the first imaging element 2a and the temperature increase of the second imaging element 2b depending on the length of the first distance (Lf) illustrated in FIG. 4, the temperature of the first imaging element 2a can be reduced in a case where the first circuit element 6 is closer to the first imaging element 2a as compared to a case where the first circuit element 6 is located at a position closer to the device center 12, and the temperature of the first imaging element 2a and the temperature of the second imaging element 2b can be made equal. Further, when the temperature of the first imaging element 2a and the temperature of the second imaging element 2b at left and right sides are equal, a temperature distribution in the entire casing 1a is not biased. and the heat radiation performance of the stereo camera 200 is improved, so that the temperature of the first circuit element 6 and the temperature of the second circuit element 7 can also be reduced.

Further, when the third distance (Lcr) is longer than the first distance (Lf), in other words, the third distance (Lcr), which is the distance between the first circuit element 6 and the first imaging element 2a, is made longer, the heat radiation from the fins 11 and the like between the first circuit element 6 and the first imaging element 2a progresses, and the amount of heat transferred from the first circuit element 6 to the first imaging element 2a decreases, so that the temperature of the first imaging element 2a can be reduced. At that time, the efficient heat radiation is possible by providing the fins 11 between the first circuit element 6 and the first imaging element 2a, and the temperature of the first imaging element 2a can be reduced.

Similarly, when the fourth distance (Lcl) is longer than the second distance (Lm), in other words, the fourth distance (Lcl), which is the distance between the second circuit element 7 and the second imaging element 2b, is made longer, the heat radiation from the fins 11 and the like between the second circuit element 7 and the second imaging element 2b progresses, and the amount of heat transferred from the second circuit element 7 to the second imaging element 2b decreases, so that the temperature of the second imaging element 2b can be reduced. At that time, the efficient heat radiation is possible by providing the fins 11 between the second circuit element 7 and the second imaging element 2b, and the temperature of the second imaging element 2b can be reduced.

According to the present embodiment, the temperature of the first imaging element 2a and the temperature of the second imaging element 2b can be made equal, and the stereo camera 200 with high measurement accuracy can be realized. Further, the temperature of the first imaging element 2a and the temperature of the second imaging element 2b can be reduced, and the stereo camera 200 with high reliability can be realized. Further, the temperature of the first circuit element 6 and the temperature of the second circuit element 7 can be reduced, and the stereo camera 200 with high reliability can be realized.

Although the first imaging element 2a, the first circuit element 6, the second circuit element 7, and the second imaging element 2b are retained in this order along the z axis in the stereo camera 200 of the present embodiment, circuit elements may be retained to be left-right reversed such that the first imaging element 2a, the second circuit element 7, the first circuit element 6, and the second imaging element 2b are retained in this order along the z axis, and the arrangement may be plane-symmetrical in the xy plane with respect to the arrangement of the first embodiment. In the case of such an arrangement, in other words, the distance from the device center 12 to the center of the second circuit element 7 may be longer than the distance from the device center 12 to the center of the first circuit element 6 in the direction between the camera modules 5a and 5b, the distance from the center of the first circuit element 6 to the center of the second imaging element 2b may be longer than the distance from the device center 12 to the center of the first circuit element 6 in the direction between the camera modules 5a and 5b, and the distance from the center of the second circuit element 7 to the center of the first imaging element 2a may be longer than the distance from the device center 12 to the center of the second circuit element 7 in the direction between the camera modules 5a and 5b.

### (Second Embodiment)

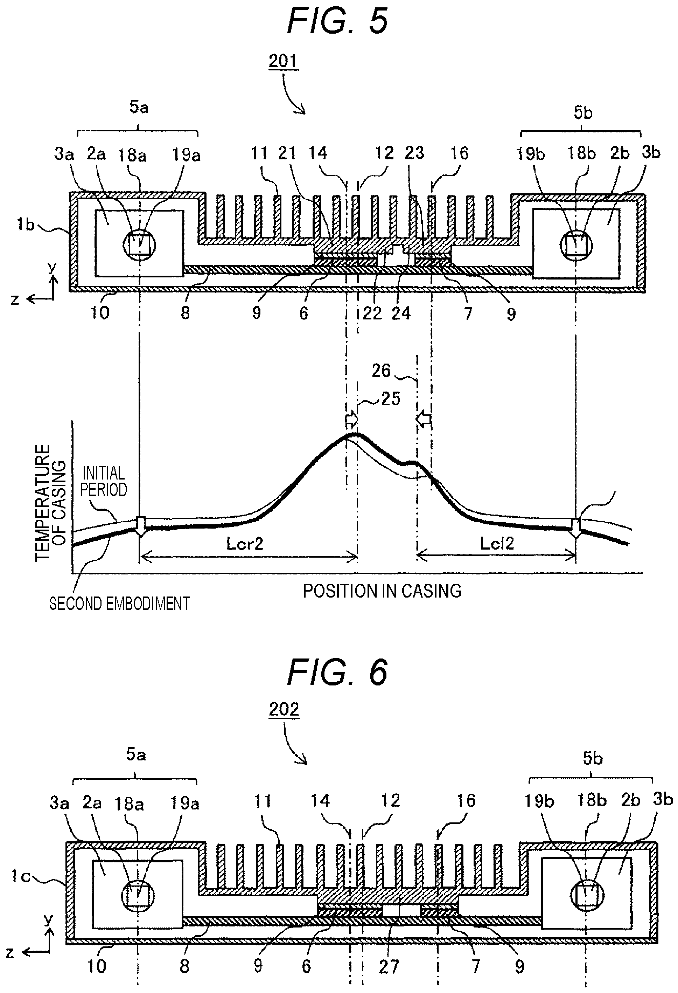

FIG. 5 is a perspective view illustrating a yz plane of a stereo camera 201 according to a second embodiment of the present invention. The stereo camera 201 has a casing 1b instead of the casing 1a of the stereo camera 200. In FIG. 5, the same configurations as those in the first embodiment will be denoted by the same reference signs, and detailed descriptions thereof will be omitted.

In the present embodiment, in a state where the second distance (Lm) is longer than the first distance (Lf), the third distance (Lcr) is longer than the first distance (Lf), and the fourth distance (Lcl) is longer than the second distance (Lm), there is a first extension portion 22 in which a first connection portion 21 connecting the first circuit element 6 and the casing 1b extends toward the second circuit element 7. Alternatively, there is a second extension portion 24 in which a second connection portion 23 connecting the second circuit element 7 and the casing 1b extends toward the first circuit element 6. Alternatively, there are both the first extension portion 22 and the second extension portion 24.

Due to the first extension portion 22, a heat generation center 25 on the casing 1b of the first circuit element 6 becomes closer to the second circuit element 7, a distance Lcr2 from the first imaging element 2a to the heat generation center 25 of the first circuit element 6 in the direction between the camera modules 5a and 5b becomes longer, the heat radiation from fins 11 and the like between the first circuit element 6 and the first imaging element 2a progresses, and the amount of heat transferred from the first circuit element 6 to the first imaging element 2a decreases, so that a temperature of the first imaging element 2a can be reduced.

Similarly, due to the second extension portion 24, a heat generation center 26 on the casing 1b of the second circuit element 7 becomes closer to the first circuit element 6, a distance Lcl2 from the second imaging element 2b to the heat generation center 26 of the second circuit element 7 in the direction between the camera modules 5a and 5b becomes longer, the heat radiation from the fins 11 and the like between the second circuit element 7 and the second imaging element 2b progresses, and the amount of heat transferred from the second circuit element 7 to the second imaging element 2b decreases, so that a temperature of the second imaging element 2b can be reduced.

According to the second embodiment of the present invention, the temperature of the first imaging element 2a and the temperature of the second imaging element 2b can be made equal, the temperature of the first imaging element 2a and the temperature of the second imaging element 2b can be reduced, and the stereo camera 201 with high measurement accuracy and high reliability can be realized.

### (Third Embodiment)

FIG. 6 is a perspective view illustrating a yz plane of a stereo camera 202 according to a third embodiment of the present invention. The stereo camera 202 has a casing 1c instead of the casing 1a of the stereo camera 200. In FIG. 6, the same configurations as those in the first and second embodiments will be denoted by the same reference signs, and detailed descriptions thereof will be omitted.

In the present embodiment, the first connection portion 21 (second embodiment) connecting the first circuit element 6 and the casing 1c and the second connection portion 23 (second embodiment) connecting the second circuit element 7 and the casing 1c are integrated to form a third connection portion 27. An end surface of the third connection portion 27 in the -y-axis direction is flush at a position of the first circuit element 6, a position between the first circuit element 6 and the second circuit element 7, and a position of the second circuit element 7 in the z-axis direction.

In the present embodiment, due to the third connection portion 27, the heat generation center 25 on the casing 1c of the first circuit element 6 is closer to the second circuit element 7, and the heat generation center 26 on the casing 1c of the second circuit element 7 is similarly closer to the first circuit element 6, which is similar to the second embodiment. Therefore, the distance Lcr2 from the first imaging element 2a to the heat generation center 25 of the first circuit element 6 in the direction between the camera modules 5a and 5b becomes longer, the heat radiation from the fins 11 and the like between the first circuit element 6 and the first imaging element 2a progresses, and the amount of heat transferred from the first circuit element 6 to the first imaging element 2a decreases, so that a temperature of the first imaging element 2a can be reduced. Further, the distance Lcl2 from the second imaging element 2b to the heat generation center 26 of the second circuit element 7 becomes longer, the heat radiation from the fins 11 and the like between the second circuit element 7 and the second imaging element 2b progresses, and the amount of heat transferred from the second circuit element 7 to the second imaging element 2b decreases, so that a temperature of the second imaging element 2b can be reduced.

According to the third embodiment of the present invention, the temperature of the first imaging element 2a and the temperature of the second imaging element 2b can be made equal, the temperature of the first imaging element 2a and the temperature of the second imaging element 2b can be reduced, and the stereo camera 202 with high measurement accuracy and high reliability can be realized.

### (Fourth Embodiment)

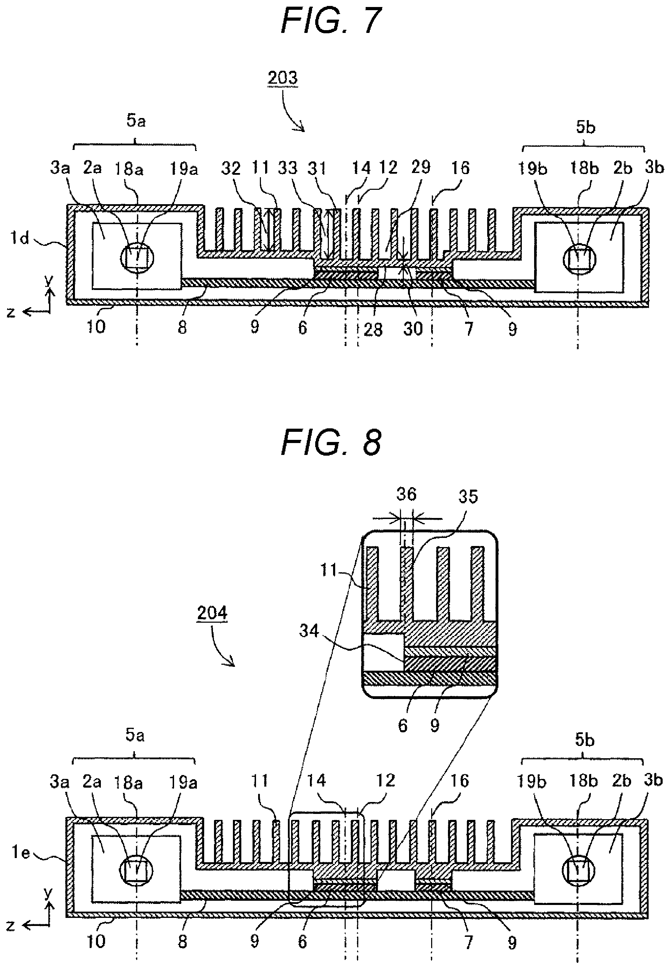

FIG. 7 is a perspective view illustrating a yz plane of a stereo camera 203 according to a fourth embodiment of the present invention. The stereo camera 203 has a casing 1d instead of the casing 1a of the stereo camera 200. In FIG. 7, the same configurations as those in the first to third embodiments will be denoted by the same reference signs, and detailed descriptions thereof will be omitted.

In the present embodiment, the first connection portion 21 (second embodiment) connecting the first circuit element 6 and the casing 1d and the second connection portion 23 (second embodiment) connecting the second circuit element 7 and the casing 1d are integrated to form a fourth connection portion 28. Then, a position 29 of the casing 1d in the height direction (y direction) is lowered within a range of the fourth connection portion 28 to make a plate thickness 30 of the casing 1d between the first circuit element 6 and the second circuit element 7 equal to that of the other places, and a fin height (fin length) 33 of fins 31 in the above range is made higher than a fin height (fin length) 32 of the other fins 11.

In the present embodiment, due to the fourth connection portion 28, the heat generation center 25 on the casing 1d of the first circuit element 6 is closer to the second circuit element 7, and the heat generation center 26 on the casing 1d of the second circuit element 7 is similarly closer to the first circuit element 6, which is similar to the second embodiment. Therefore, the distance Lcr2 from the first imaging element 2a to the heat generation center 25 of the first circuit element 6 in the direction between the camera modules 5a and 5b becomes longer, the heat radiation from the fins 11 and the like between the first circuit element 6 and the first imaging element 2a progresses, and the amount of heat transferred from the first circuit element 6 to the first imaging element 2a decreases, so that a temperature of the first imaging element 2a can be reduced. Further, the distance Lcl2 from the second imaging element 2b to the heat generation center 26 of the second circuit element 7 becomes longer, the heat radiation from the fins 11 and the like between the second circuit element 7 and the second imaging element 2b progresses, and the amount of heat transferred from the second circuit element 7 to the second imaging element 2b decreases, so that a temperature of the second imaging element 2b can be reduced. Further, since the fin height 33 between the first circuit element 6 and the second circuit element 7 is increased, the heat radiation performance can be improved, and the temperature of the first circuit element 6 and the temperature of the second circuit element 7 can be reduced. Further, since the plate thickness 30 of the casing 1d between the first circuit element 6 and the second circuit element 7 can be made equal to that of other places, the moldability of the casing 1d is improved, the dimensional accuracy is improved, and the reliability of the stereo camera 203 is also improved.

According to the fourth embodiment of the present invention, the temperature of the first imaging element 2a and the temperature of the second imaging element 2b can be made equal, the temperature of the first imaging element 2a and the temperature of the second imaging element 2b can be reduced, and the stereo camera 203 with high measurement accuracy and high reliability can be realized.

### (Fifth Embodiment)

FIG. 8 is a perspective view illustrating a yz plane of a stereo camera 204 according to a fifth embodiment of the present invention. The stereo camera 204 has a casing 1e instead of the casing 1a of the stereo camera 200. In FIG. 8, the same configurations as those in the first and fourth embodiments will be denoted by the same reference signs, and detailed descriptions thereof will be omitted.

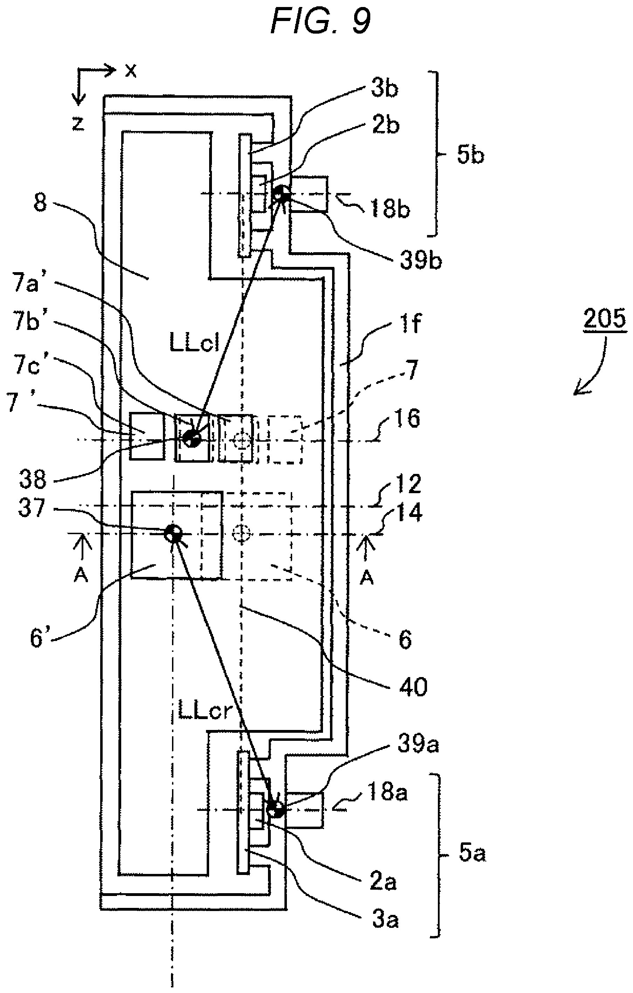

In the present embodiment, an end portion 34 of the first circuit element 6 on the first imaging element 2a side is disposed so as to be located within a width 36 of a fin 35 as illustrated in the enlarged view of FIG. 9 in the first embodiment in which the second distance (Lm) is longer than the first distance (Lf), the third distance (Lcr) is longer than the first distance (Lf), and the fourth distance (Lcl) is longer than the second distance (Lm). Since the end portion 34 of the first circuit element 6 on the first imaging element 2a side is located within the width 36 of the fin 35, it is possible to efficiently radiate heat from the first circuit element 6 toward the first imaging element 2a and to reduce a temperature of the first imaging element 2a.

Similarly, if an end portion of the second circuit element 7 on the second imaging element 2b side is located within a width of a fin, it is possible to efficiently radiate heat from the second circuit element 7 toward the second imaging element 2b and to reduce a temperature of the second imaging element 2b.

According to the fifth embodiment of the present invention, the temperature of the first imaging element 2a and the temperature of the second imaging element 2b can be made equal, the temperature of the first imaging element 2a and the temperature of the second imaging element 2b can be reduced, and the stereo camera 204 with high measurement accuracy and high reliability can be realized.

### (Sixth Embodiment)

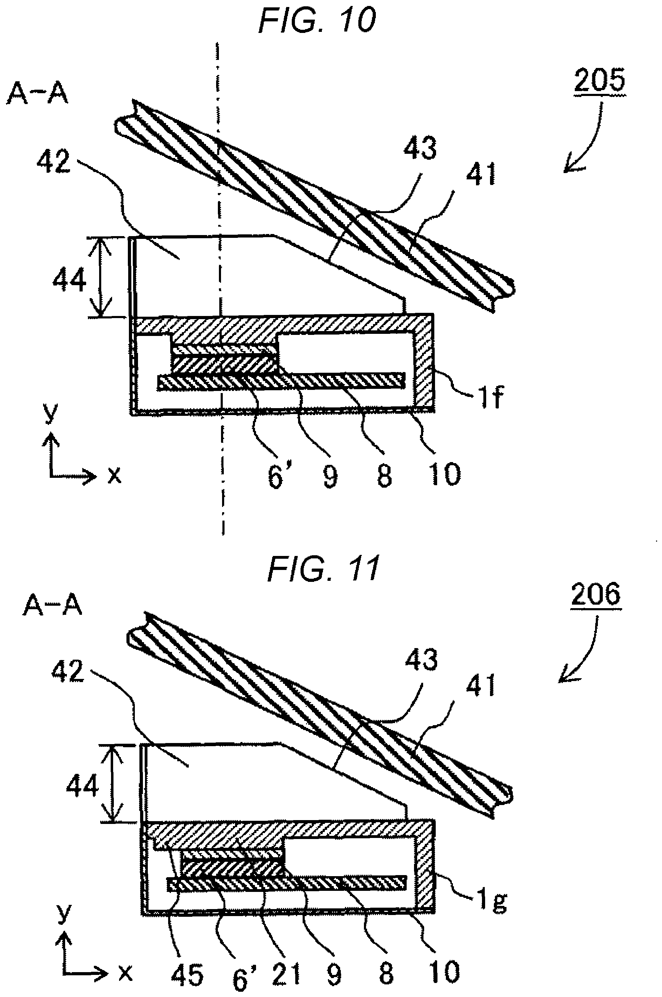

FIG. 9 is a perspective view illustrating a zx plane (viewed from above) of a stereo camera 205 according to a sixth embodiment of the present invention. The stereo camera 205 has a casing 1f instead of the casing 1a of the stereo camera 200. FIG. 10 is an A-A cross-sectional view of FIG. 9. In FIGS. 9 and 10, the same configurations as those in the first and fifth embodiments will be denoted by the same reference signs, and detailed descriptions thereof will be omitted.

The first to sixth embodiments describe the distance between the camera modules 5a and 5b in the direction (z-axis direction).

Here, a connection center 37 of the first circuit element 6 to the casing 1f on the horizontal plane (zx plane) is a point obtained by projecting a centroid of the first circuit element 6 onto the horizontal plane, and a connection center 38 of the second circuit element 7 is a point obtained by projecting a centroid of the plurality of second circuit elements 7 onto the horizontal plane. Further, connection centers 39a and 39b of the first imaging element 2a and the second imaging element 2b are points obtained by projecting centers of surfaces attached to the casing 1f as the camera modules 5a and 5b onto the horizontal plane.

Considering distances in a direction between the camera modules 5a and 5b (z-axis direction) and in the optical-axis direction (x-axis direction), the first imaging element 2a and the second imaging element 2b, and the first circuit element 6 and the second circuit element 7 on the horizontal plane (zx plane) are disposed in the casings 1a to 1e substantially in a straight line as indicated by a broken line 40 in FIG. 9, in the above-described respective embodiments.

In the present embodiment, for example, a distance (LLcr) between the connection center 39a of the first imaging element 2a and the connection center 37 of a first circuit element 6' is increased to further reduce the influence of a temperature increase of the first circuit element 6' on the first imaging element 2a. In the present embodiment, the first circuit element 6' is disposed on the rear side of the optical axis (negative direction of the x axis) as indicated by a solid line in FIG. 9. Similarly, the second circuit element 7' may be disposed on the rear side of the optical axis (negative direction of the x axis) to increase a distance (LLcl) between the connection center 39b of the second imaging element 2b and the connection center 38 of the second circuit element 7' in order to further reduce the influence of a temperature increase of the second circuit element 7' including second circuit elements 7a', 7b'and 7c' on the second imaging element 2b. That is, when the first imaging element 2a and the second imaging element 2b are disposed on the front side of the stereo camera 205, the first circuit element 6' and the second circuit element 7' may be disposed on the rear side of the stereo camera 205.

The cross-sectional view of FIG. 10 is a view cut at a position of the first circuit element 6' of the stereo camera 205 of FIG. 9. As illustrated in FIG. 10, the stereo camera 205 is located near a windshield 41, and thus, the entire stereo camera 205 adopts a shape along the windshield 41, that is, a shape in which a slope 43 is provided on a front side of a shape of a fin 42 in many cases. Therefore, when the first circuit element 6' and the second circuit element 7' are disposed on the rear side of the optical axis, a portion where a fin height 44 is high can be effectively used to improve the heat radiation performance, and it is possible to reduce a temperature of the first imaging element 2a, a temperature of the second imaging element 2b, a temperature of the first circuit element 6' and a temperature of the second circuit element 7', and to realize the stereo camera 205 with high reliability.

### (Seventh Embodiment)

FIG. 11 is a cross-sectional view of a stereo camera 206 according to a seventh embodiment of the present invention cut at the same position as that in FIG. 10. The stereo camera 206 has a casing 1g instead of the casing 1a of the stereo camera 200. In FIG. 11, the same configurations as those in the first and sixth embodiments will be denoted by the same reference signs, and detailed descriptions thereof will be omitted.

In the present embodiment, there is a third extension portion 45 in which the first connection portion 21 connecting the first circuit element 6' and the casing 1g extends to the rear side of the optical axis (negative direction of the x axis), which is similar to the sixth embodiment. Due to the third extension portion 45, a heat generation center on the casing 1g of the first circuit element 6' becomes closer to the rear side of the optical axis, a distance from the first imaging element 2a to the heat generation center of the first circuit element 6' becomes longer, the heat radiation from the fins 42 and the like between the first circuit element 6' and the first imaging element 2a progresses, and the amount of heat transferred from the first circuit element 6' to the first imaging element 2a decreases, so that a temperature of the first imaging element 2a can be reduced.

Similarly, if there is a fourth extension portion (not illustrated) in which the second connection portion 23 connecting the second circuit element 7' and the casing 1f extends to the rear side of the optical axis (negative direction of the x axis), a heat generation center on the casing 1f of the second circuit element 7' becomes closer to the rear side of the optical axis, a distance from the second imaging element 2b to the heat generation center of the second circuit element 7' becomes longer, the heat radiation from the fins 42 and the like between the second circuit element 7' and the second imaging element 2b progresses, and the amount of heat transferred to the second imaging element 2b decreases, so that a temperature of the second imaging element 2b can be reduced.

According to the seventh embodiment of the present invention, the temperature of the first imaging element 2a and the temperature of the second imaging element 2b can be reduced, and the stereo camera 206 with high reliability can be realized.

### (Eighth Embodiment)

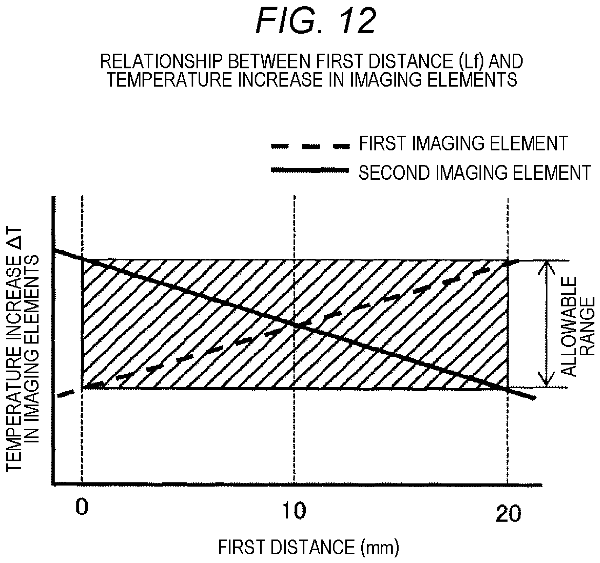

FIG. 12 is a view illustrating a temperature increase of the first imaging element 2a and a temperature increase of the second imaging element 2b depending on a length of the first distance (Lf) in a stereo camera according to an eighth embodiment of the present invention. In the present embodiment, a structure of the stereo camera may be any of the first to seventh embodiments. Thus, a description will be given here with reference to the structure of the stereo camera 200 of the first embodiment. In the present embodiment, the first distance (Lf) is set based on an allowable range of a temperature difference between a temperature of the first imaging element 2a and a temperature of the second imaging element 2b.

Conditions that the second distance (Lm) is longer than the first distance (Lf), the third distance (Lcr) is longer than the first distance (Lf), and the fourth distance (Lcl) is longer than the second distance (Lm) can make the temperature of the first imaging element 2a and the temperature of the second imaging element 2b equal. At that time, a range of the length of the first distance (Lf), which is included in the allowable range of the temperature difference between the temperature of the first imaging element 2a and the temperature of the second imaging element 2b, which is allowable for the operation of the stereo camera 200, is obtained by FIG. 12 as the range of 0 to 20 mm. That is, if the length of the first distance (Lf) is in the range of 0 to 20 mm, the temperature difference between the temperature of the first imaging element 2a and the temperature of the second imaging element 2b can be set within the range that is allowable for the operation of the stereo camera 200. Therefore, the temperature of the first imaging element 2a and the temperature of the second imaging element 2b can be made equal by setting the first distance (Lf) within the range of 0 to 20 mm, and the stereo camera 200 with high measurement accuracy can be realized. At that time, the stereo camera 200 with high reliability can be realized even if a disturbance such as an assembly variation occurs.

Further, the first circuit element 6 has a larger heat generation amount (power consumption) than the second circuit element 7, and a difference in the heat generation amount is three to five times. Therefore, it is preferable that the second distance (Lm) from the device center 12 to the second circuit element center 16 be longer than the first distance (Lf) from the device center 12 to the first circuit element center 14 in the direction between the camera modules 5a and 5b, and that the second distance (Lm) be three to five times the first distance (Lf).

According to the present embodiment, the temperature of the first imaging element 2a and the temperature of the second imaging element 2b can be made equal, and the stereo camera 200 with high measurement accuracy can be realized.

Note that the present invention is not limited to the above-described embodiments, but includes various modifications. For example, the above-described embodiments have been described in detail in order to describe the present invention in an easily understandable manner, and are not necessarily limited to one including the entire configuration that has been described above. Further, some configurations of a certain embodiment can be substituted by configurations of another embodiment, and further, a configuration of another embodiment can be added to a configuration of a certain embodiment. Further, addition, deletion or substitution of other configurations can be made with respect to some configurations of each embodiment.

### Reference Signs List

- 1a to 1g: casing
- 2a: first imaging element
- 2b: second imaging element
- 3a: first imaging element substrate
- 3b: second imaging element substrate
- 4a: first lens
- 4b: second lens
- 5a: first camera module
- 5b: second camera module
- 6: first circuit element
- 7: second circuit element
- 8: circuit board
- 9: thermally conductive member
- 10: cover
- 11: fin
- 12: device center (center of stereo camera device)
- 13: midpoint
- 14: first circuit element center
- 15: centroid
- 16: second circuit element center
- 17: centroid
- 18a: first imaging element center
- 18b: second imaging element center
- 19a: first imaging element center
- 19b: second imaging element center
- 21: first connection portion
- 22: first extension portion
- 23: second connection portion
- 24: second extension portion
- 25: heat generation center
- 26: heat generation center
- 27: third connection portion
- 28: fourth connection portion
- 29: position
- 30: plate thickness
- 31: fin
- 32: fin height
- 33: fin height
- 34: end portion
- 35: fin
- 36: width
- 37: connection center
- 38: connection center
- 39a: connection center
- 39b: connection center
- 40: broken line
- 41: windshield
- 42: fin
- 43: slope
- 44: fin height
- 45: third extension portion
- 200: stereo camera
- 201: stereo camera
- 202: stereo camera
- 203: stereo camera
- 204: stereo camera
- 205: stereo camera
- 206: stereo camera

## Claims

1. A stereo camera device comprising:
a first imaging element (2a) and a second imaging element (2b) ;
a first circuit element (6) and a second circuit element (7) disposed between the first imaging element (2a) and the second imaging element (2b), wherein
the first circuit element (6) has a larger heat generation amount than the second circuit element (7); and
a casing (1a; 1b; 1c; 1d; 1e; 1f; 1g) for retaining the first imaging element (2a), the first circuit element (6), the second circuit element (7), and the second imaging element (2b) in order,
wherein a plane, which is passing through a midpoint (13) between the first imaging element (2a) and the second imaging element (2b) and which has a normal line connecting the first imaging element (2a) and the second imaging element (2b), is defined as a stereo camera device center (12),
a plane, which is passing through a centroid of the first imaging element (2a) and which has a normal line connecting the first imaging element (2a) and the second imaging element (2b), is defined as a first imaging element center (18a),
a plane, which is passing through a centroid of the second imaging element (2b) and which has a normal line connecting the first imaging element (2a) and the second imaging element (2b), is defined as a second imaging element center (18b),
a plane, which is passing through a centroid (15) of the first circuit element (6) and which has a normal line connecting the first imaging element (2a) and the second imaging element (2b), is defined as a first circuit element center (14),
a plane, which is passing through a centroid (17) of the second circuit element (7) and which has a normal line connecting the first imaging element (2a) and the second imaging element (2b), is defined as a second circuit element center (16),
a second distance (Lm) from the second circuit element center (16) to the stereo camera device center (12) is longer than a first distance (Lf) from the first circuit element center (14) to the stereo camera device center (12) in a direction connecting the first imaging element (2a) and the second imaging element (2b),
a third distance (Lcr) from the first circuit element center (14) to the first imaging element center (18a) is longer than the first distance (Lf), and
a fourth distance (Lcl) from the second circuit element center (16) to the second imaging element center (18b) is longer than the second distance (Lm).

2. The stereo camera device according to claim 1, wherein
a first connection portion (21) of the first circuit element (6) to the casing (1a; 1b; 1c; 1d; 1e; 1f; 1g) extends to a side of the second circuit element (7) from an outer form of the first circuit element (6), or a second connection portion (23) of the second circuit element (7) to the casing (1a; 1b; 1c; 1d; 1e; 1f; 1g) extends to a side of the first circuit element (6) from an outer form of the second circuit element (7).

3. The stereo camera device according to claim 1, wherein
a third connection portion (27), obtained by integrating a first connection portion (21) of the first circuit element (6) to the casing (1a; 1b; 1c; 1d; 1e; 1f; 1g) and a second connection portion (23) of the second circuit element (7) to the casing (1a; 1b; 1c; 1d; 1e; 1f; 1g), is provided, and an end surface of the third connection portion (27) in a -y-axis direction is flush at a position of the first circuit element (6), a position between the first circuit element (6) and the second circuit element (7), and a position of the second circuit element (7) in a z-axis direction.

4. The stereo camera device according to claim 2 or 3, wherein
the casing (1a; 1b; 1c; 1d; 1e; 1f; 1g) has a plurality of fins (11; 31) extending in a y-axis direction at a predetermined interval in the z-axis direction at least between a position of the first connection portion (21) and a position of the second connection portion (23) in the z-axis direction.

5. The stereo camera device according to claim 4, wherein
the plurality of fins (11; 31) are also disposed in places other than a place between the position of the first connection portion (21) and the position of the second connection portion (23) in the z-axis direction, and
among the plurality of fins (11; 31), fins (31) between the position of the first connection portion (21) and the position of the second connection portion (23) in the z-axis direction have a longer length (33) in the y-axis direction than fins (11) disposed in places other than the place between the position of the first connection portion (21) and the position of the second connection portion (23) in the z-axis direction.

6. The stereo camera device according to claim 4 or 5, wherein
an end portion (34) of the first circuit element (6) on a side of the first imaging element (2a) is located within a width (36) of one of the plurality of fins (35) in the z-axis direction.

7. The stereo camera device according to any one of claims 1 to 6, wherein
the second circuit element (7) is an element group formed of a plurality of elements, and
the second circuit element center (16) is a plane which is passing through a centroid (17) of the element group and which has a normal line connecting the first imaging element (2a) and the second imaging element (2b).

8. The stereo camera device according to any one of claims 1 to 7, wherein
the first distance (Lf) is 0 mm to 20 mm.

9. The stereo camera device according to any one of claims 1 to 8, wherein
the second distance (Lm) is three to five times the first distance (Lf).

## Patentansprüche

1. Stereokameravorrichtung, umfassend:
ein erstes Bildgebungselement (2a) und ein zweites Bildgebungselement (2b);
ein erstes Schaltungselement (6) und ein zweites Schaltungselement (7), die zwischen dem ersten Bildgebungselement (2a) und dem zweiten Bildgebungselement (2b) angeordnet sind, wobei
das erste Schaltungselement (6) eine größere Wärmeerzeugungsmenge als das zweite Schaltungselement (7) aufweist; und
ein Gehäuse (1a; 1b; 1c; 1d; 1e; 1f; 1g) zum Halten des ersten Bildgebungselements (2a), des ersten Schaltungselements (6), des zweiten Schaltungselements (7) und des zweiten Bildgebungselements (2b) der Reihe nach,
wobei eine Ebene, die durch einen Mittelpunkt (13) zwischen dem ersten Bildgebungselement (2a) und dem zweiten Bildgebungselement (2b) verläuft und die eine normale Linie aufweist, die das erste Bildgebungselement (2a) und das zweite Bildgebungselement (2b) verbindet, als eine Stereokameravorrichtungsmitte (12) definiert ist,
eine Ebene, die durch einen Schwerpunkt des ersten Bildgebungselements (2a) verläuft und die eine normale Linie aufweist, die das erste Bildgebungselement (2a) und das zweite Bildgebungselement (2b) verbindet, als eine erste Bildgebungselementmitte (18a) definiert ist,
eine Ebene, die durch einen Schwerpunkt des zweiten Bildgebungselements (2b) verläuft und die eine normale Linie aufweist, die das erste Bildgebungselement (2a) und das zweite Bildgebungselement (2b) verbindet, als eine zweite Bildgebungselementmitte (18b) definiert ist,
eine Ebene, die durch einen Schwerpunkt (15) des ersten Schaltungselements (6) verläuft und die eine normale Linie aufweist, die das erste Bildgebungselement (2a) und das zweite Bildgebungselement (2b) verbindet, als eine erste Schaltungselementmitte (14) definiert ist,
eine Ebene, die durch einen Schwerpunkt (17) des zweiten Schaltungselements (7) verläuft und die eine normale Linie aufweist, die das erste Bildgebungselement (2a) und das zweite Bildgebungselement (2b) verbindet, als eine zweite Schaltungselementmitte (16) definiert ist,
ein zweiter Abstand (Lm) von der zweiten Schaltungselementmitte (16) zu der Stereokameravorrichtungsmitte (12) länger ist als ein erster Abstand (Lf) von der ersten Schaltungselementmitte (14) zu der Stereokameravorrichtungsmitte (12) in einer Richtung, die das erste Bildgebungselement (2a) und das zweite Bildgebungselement (2b) verbindet,
ein dritter Abstand (Lcr) von der ersten Schaltungselementmitte (14) zu der ersten Bildgebungselementmitte (18a) länger ist als der erste Abstand (Lf), und
ein vierter Abstand (Lcl) von der zweiten Schaltungselementmitte (16) zu der zweiten Bildgebungselementmitte (18b) länger ist als der zweite Abstand (Lm).

2. Stereokameravorrichtung nach Anspruch 1, wobei
sich ein erster Verbindungsabschnitt (21) des ersten Schaltungselements (6) mit dem Gehäuse (1a; 1b; 1c; 1d; 1e; 1f; 1g) von einer äußeren Form des ersten Schaltungselements (6) zu einer Seite des zweiten Schaltungselements (7) erstreckt, oder sich ein zweiter Verbindungsabschnitt (23) des zweiten Schaltungselements (7) mit dem Gehäuse (1a; 1b; 1c; 1d; 1e; 1f; 1g) von einer äußeren Form des zweiten Schaltungselements (7) zu einer Seite des ersten Schaltungselements (6) erstreckt.

3. Stereokameravorrichtung nach Anspruch 1, wobei
ein dritter Verbindungsabschnitt (27), der durch Integrieren eines ersten Verbindungsabschnitts (21) des ersten Schaltungselements (6) mit dem Gehäuse (1a; 1b; 1c; 1d; 1e; 1f; 1g) und eines zweiten Verbindungsabschnitts (23) des zweiten Schaltungselements (7) mit dem Gehäuse (1a; 1b; 1c; 1d; 1e; 1f; 1g) erhalten wird, bereitgestellt ist, und eine Endfläche des dritten Verbindungsabschnitts (27) in einer -y-Achsenrichtung an einer Position des ersten Schaltungselements (6), einer Position zwischen dem ersten Schaltungselement (6) und dem zweiten Schaltungselement (7) und einer Position des zweiten Schaltungselements (7) in einer z-Achsenrichtung bündig ist.

4. Stereokameravorrichtung nach Anspruch 2 oder 3, wobei
das Gehäuse (1a; 1b; 1c; 1d; 1e; 1f; 1g) eine Vielzahl von Rippen (11; 31) aufweist, die sich in einer y-Achsenrichtung in einem vorbestimmten Intervall in der z-Achsenrichtung zumindest zwischen einer Position des ersten Verbindungsabschnitts (21) und einer Position des zweiten Verbindungsabschnitts (23) in der z-Achsenrichtung erstrecken.

5. Stereokameravorrichtung nach Anspruch 4, wobei
die Vielzahl von Rippen (11; 31) auch an anderen Stellen als einer Stelle zwischen der Position des ersten Verbindungsabschnitts (21) und der Position des zweiten Verbindungsabschnitts (23) in der z-Achsenrichtung angeordnet sind, und
unter der Vielzahl von Rippen (11; 31) Rippen (31) zwischen der Position des ersten Verbindungsabschnitts (21) und der Position des zweiten Verbindungsabschnitts (23) in der z-Achsenrichtung eine längere Länge (33) in der y-Achsenrichtung als Rippen (11) aufweisen, die an anderen Stellen als der Stelle zwischen der Position des ersten Verbindungsabschnitts (21) und der Position des zweiten Verbindungsabschnitts (23) in der z-Achsenrichtung angeordnet sind.

6. Stereokameravorrichtung nach Anspruch 4 oder 5, wobei
ein Endabschnitt (34) des ersten Schaltungselements (6) auf einer Seite des ersten Bildgebungselements (2a) innerhalb einer Breite (36) einer der Vielzahl von Rippen (35) in der z-Achsenrichtung angeordnet ist.

7. Stereokameravorrichtung nach einem der Ansprüche 1 bis 6, wobei
das zweite Schaltungselement (7) eine Elementgruppe ist, die aus einer Vielzahl von Elementen gebildet ist, und
die zweite Schaltungselementmitte (16) eine Ebene ist, die durch einen Schwerpunkt (17) der Elementgruppe verläuft und die eine normale Linie aufweist, die das erste Bildgebungselement (2a) und das zweite Bildgebungselement (2b) verbindet.

8. Stereokameravorrichtung nach einem der Ansprüche 1 bis 7, wobei
der erste Abstand (Lf) 0 mm bis 20 mm beträgt.

9. Stereokameravorrichtung nach einem der Ansprüche 1 bis 8, wobei
der zweite Abstand (Lm) das Drei- bis Fünffache des ersten Abstands (Lf) beträgt.

## Revendications

1. Dispositif de caméra stéréo comprenant :
un premier élément d'imagerie (2a) et un second élément d'imagerie (2b) ;
un premier élément de circuit (6) et un second élément de circuit (7) disposés entre le premier élément d'imagerie (2a) et le second élément d'imagerie (2b), dans lequel
le premier élément de circuit (6) a une plus grande quantité de génération de chaleur que le second élément de circuit (7) ; et
un boîtier (1a ; 1b ; 1c ; 1d ; 1e ; 1f ; 1g) pour retenir le premier élément d'imagerie (2a), le premier élément de circuit (6), le second élément de circuit (7) et le second élément d'imagerie (2b) dans l'ordre,
dans lequel un plan, qui passe par un point médian (13) entre le premier élément d'imagerie (2a) et le second élément d'imagerie (2b) et qui a une ligne normale reliant le premier élément d'imagerie (2a) et le second élément d'imagerie (2b), est défini comme un centre de dispositif de caméra stéréo (12),
un plan, qui passe par un centroïde du premier élément d'imagerie (2a) et qui a une ligne normale reliant le premier élément d'imagerie (2a) et le second élément d'imagerie (2b), est défini comme un centre de premier élément d'imagerie (18a),
un plan, qui passe par un centroïde du second élément d'imagerie (2b) et qui a une ligne normale reliant le premier élément d'imagerie (2a) et le second élément d'imagerie (2b), est défini comme un centre de second élément d'imagerie (18b),
un plan, qui passe par un centroïde (15) du premier élément de circuit (6) et qui a une ligne normale reliant le premier élément d'imagerie (2a) et le second élément d'imagerie (2b), est défini comme un centre de premier élément de circuit (14),
un plan, qui passe par un centroïde (17) du second élément de circuit (7) et qui a une ligne normale reliant le premier élément d'imagerie (2a) et le second élément d'imagerie (2b), est défini comme un centre de second élément de circuit (16),
une deuxième distance (Lm) du centre de second élément de circuit (16) au centre de dispositif de caméra stéréo (12) est plus longue qu'une première distance (Lf) du centre de premier élément de circuit (14) au centre de dispositif de caméra stéréo (12) dans une direction reliant le premier élément d'imagerie (2a) et le second élément d'imagerie (2b),
une troisième distance (Lcr) du centre de premier élément de circuit (14) au centre de premier élément d'imagerie (18a) est plus longue que la première distance (Lf), et
une quatrième distance (Lcl) du centre de second élément de circuit (16) au centre de second élément d'imagerie (18b) est plus longue que la deuxième distance (Lm).

2. Dispositif de caméra stéréo selon la revendication 1, dans lequel
une première partie de connexion (21) du premier élément de circuit (6) au boîtier (1a ; 1b ; 1c ; 1d ; 1e ; 1f ; 1g) s'étend jusqu'à un côté du second élément de circuit (7) à partir d'une forme extérieure du premier élément de circuit (6), ou une seconde partie de connexion (23) du second élément de circuit (7) au boîtier (1a ; 1b ; 1c ; 1d ; 1e ; 1f ; 1g) s'étend jusqu'à un côté du premier élément de circuit (6) à partir d'une forme extérieure du second élément de circuit (7).

3. Dispositif de caméra stéréo selon la revendication 1, dans lequel
une troisième partie de connexion (27), obtenue en intégrant une première partie de connexion (21) du premier élément de circuit (6) au boîtier (1a ; 1b ; 1c ; 1d ; 1e ; 1f ; 1g) et une seconde partie de connexion (23) du second élément de circuit (7) au boîtier (1a ; 1b ; 1c ; 1d ; 1e ; 1f ; 1g), est prévue, et une surface d'extrémité de la troisième partie de connexion (27) dans une direction d'axe -y est de niveau au niveau d'une position du premier élément de circuit (6), d'une position entre le premier élément de circuit (6) et le second élément de circuit (7), et d'une position du second élément de circuit (7) dans une direction d'axe z.

4. Dispositif de caméra stéréo selon la revendication 2 ou 3, dans lequel
le boîtier (1a ; 1b ; 1c ; 1d ; 1e ; 1f ; 1g) a une pluralité d'ailettes (11 ; 31) s'étendant dans une direction d'axe y à un intervalle prédéterminé dans la direction d'axe z au moins entre une position de la première partie de connexion (21) et une position de la seconde partie de connexion (23) dans la direction d'axe z.

5. Dispositif de caméra stéréo selon la revendication 4, dans lequel
la pluralité d'ailettes (11 ; 31) sont également disposées à des endroits autres qu'un endroit entre la position de la première partie de connexion (21) et la position de la seconde partie de connexion (23) dans la direction d'axe z, et
parmi la pluralité d'ailettes (11 ; 31), des ailettes (31) entre la position de la première partie de connexion (21) et la position de la seconde partie de connexion (23) dans la direction d'axe z ont une longueur plus longue (33) dans la direction d'axe y que des ailettes (11) disposées à des endroits autres que l'endroit entre la position de la première partie de connexion (21) et la position de la seconde partie de connexion (23) dans la direction d'axe z.

6. Dispositif de caméra stéréo selon la revendication 4 ou 5, dans lequel
une partie d'extrémité (34) du premier élément de circuit (6) sur un côté du premier élément d'imagerie (2a) est située dans une largeur (36) de l'une de la pluralité d'ailettes (35) dans la direction d'axe z.

7. Dispositif de caméra stéréo selon l'une quelconque des revendications 1 à 6, dans lequel
le second élément de circuit (7) est un groupe d'éléments formé d'une pluralité d'éléments, et
le centre de second élément de circuit (16) est un plan qui passe par un centroïde (17) du groupe d'éléments et qui a une ligne normale reliant le premier élément d'imagerie (2a) et le second élément d'imagerie (2b).

8. Dispositif de caméra stéréo selon l'une quelconque des revendications 1 à 7, dans lequel
la première distance (Lf) est de 0 mm à 20 mm.

9. Dispositif de caméra stéréo selon l'une quelconque des revendications 1 à 8, dans lequel
la deuxième distance (Lm) est de trois à cinq fois la première distance (Lf).
